# EUROPEAN PATENT APPLICATION

(11) **EP 3 892 758 A1**
(43) Date of publication of application: **13.10.2021**
(21) Application number: 21166902.3
(22) Date of filing: 06.04.2021
(51) Int. Cl.: C25B 15/08, C25B 9/23, C25B 9/73, C25B 1/04

(54) **METHOD AND APPARATUS FOR DE-IONIZING THE SUPPLY WATER OF A PEM CELL**

(30) Priority: 10.04.2020 IT 202000007702
(71) Applicant: MicroPROGEL SRL, 35038 Torreglia (PD) (IT)
(72) Inventor: GAFFO, Valter, 35038 - Torreglia (PD) (IT)
(74) Representative: Citron, Massimiliano

(57) **Abstract**

A method is described for feeding a PEM cell (12) of an apparatus (10) to produce hydrogen by separating water molecules into oxygen and hydrogen molecules. For this purpose, a pressure buildup of oxygen generated by the PEM cell is created and a force is generated with such pressure to push the feed water through a de-ionizing material or means.

## Description

The invention relates to a method and apparatus for deionizing the feed water of a polymeric-membrane PEM cell.

Hydrogen generators using PEM cells with polymeric-membrane (typically Nafion), see e.g. EP2371438, basically work on the same principle. Water is brought to the PEM 5cell, where it separates into pure hydrogen (H₂) and oxygen (O₂) according to the reaction

2H₂O → 2H₂ + O₂.

The water that arrives to the PEM cell must be as pure as possible, to do this it must be de-ionized to capture the free ions and lower the conductivity, in order to avoid 10problems. E.g. metal ions dispersed in the water will deteriorate the membrane of the PEM cell.

Current solutions involve placing sachets filled with de-ionizing resin in the water container for the PEM cell. However, the sachets come into contact only with the surrounding water, so their de-ionizing action is limited. Another solution, which improves 15the action of the de-ionizing resins, is to force the water through a cartridge filled with resins, but it is necessary to complicate the system with a closed circuit for the water and a pump to circulate it.

To obviate one or more of these problems by improving the state of the art is the object of the invention, which is defined in the appended claims, wherein the dependent 20ones define advantageous variants.

An aspect of the invention is a method for producing hydrogen by separating water molecules into oxygen and hydrogen molecules via a membrane PEM cell and simultaneously de-ionizing feed water of the PEM cell, wherein:
a pressurized buildup of oxygen generated by the PEM cell is obtained, and
with such pressure, a force is generated to push the feed water through a de-ionizing material or means.

That is, through a buildup of pressurized oxygen generated by the PEM cell a force is generated to push the feed water through a de-ionizing material or means.

Thanks to the method, a forced conduction of water through the de-ionizing material 30or means is achieved, ensuring the de-ionization of a considerable amount of water, but avoiding the use of a mechanical pump.

This force can be generated directly on the water, by direct contact between the oxygen and the water, or by e.g. a piston or a moving wall pushed by the oxygen under pressure.

According to a preferred embodiment, the feed water passed through the de-ionizing material or means is recovered into a container. According to a more preferred embodiment, the water recovered in the container returns to its starting point by passing through the de-ionizing material or means in the opposite direction.

According to an even more preferred embodiment, the water returns to its starting point pushed by the force of gravity.

According to an even more preferred embodiment, the water returns to its starting point pushed by the gaseous pressure generated by a pressurized oxygen buildup generated by a PEM cell.

According to a preferred embodiment, the water travels cyclically back and forth from the starting point to the container, particularly under the thrust of oxygen generated by a PEM cell.

According to a preferred embodiment, a (first) container of water is arranged above the PEM cell so that the PEM cell constitutes the bottom of the (first) container and is in contact with the water, and inside the (first) container oxygen generated by the PEM cell is accumulated under pressure to pressurize and push the water outside the (first) container and through said de-ionizing material or means. There is the advantage of greater compactness of the overall apparatus. Besides, the separation between the container and the PEM cell is reduced to a minimum, and piping to transport the water to the PEM cell is eliminated, which cell is fed by water that remains immobile in contact with it and wets it directly.

According to a preferred embodiment, the oxygen pressure generated by the PEM cell in the first container forces the water into a second container through a conduit which contains de-ionizing material and joins the first and second container. Thus, the water is recovered and only the conduit containing de-ionizing material needs to be replaced to renew its de-ionizing charge. Preferably, the second container too is arranged over a PEM cell or the same PEM cell so that the PEM cell constitutes the bottom thereof and is in contact with the water contained therein to generate oxygen in the second container.

According to a preferred embodiment, a vent of the first and/or second container is opened and closed periodically to prevent the outflow of the oxygen generated by the PEM cell and increase the oxygen pressure inside the first and/or second container.

It is also possible to make the water come out of a container without returning to it, e.g. by cascading N tanks, or it is also possible to return to a container the water which previously has come out of it and has been de-ionized by alternative means to those described. Not necessarily every container must have an associated PEM cell.

According to a preferred embodiment, said vent is periodically opened and closed with a predetermined timing, which time could be a function of the instantaneous production of hydrogen (therefore of oxygen). According to a different embodiment, said vent is periodically opened and closed when the oxygen pressure has reached a threshold value. According to another different embodiment, said vent is periodically opened and closed
when the water level in the pressurized container has reached a minimum and/or maximum threshold level, respectively,
or simply with a predefined time or
as a function of the production of hydrogen (therefore of oxygen).

According to a preferred embodiment, oxygen pressure generated by a PEM cell constituting the bottom of the second container pushes the water contained in the second container into the first container, in particular pushing the water through a conduit which contains de-ionizing material and joins the first and second container. Thus, the water is recovered and, by passing from one container to another, cyclically passes through de-ionizing material for increased de-ionization.

According to a preferred embodiment, from the second container the water returns to the first container by gravity, in particular through a conduit containing de-ionizing material and joining the first and second containers. In this variant, the management of the water and oxygen flow is simplified.

Terms such as *above* or *below* refer to the apparatus when in use, specifically referring to the direction of the force of gravity, which determines the direction of the water flow from the container to the PEM cell.

Another aspect of the invention is an apparatus for producing hydrogen, capable of carrying out the above-mentioned method, comprising:
a membrane PEM cell able to produce hydrogen by separating water molecules into oxygen and hydrogen molecules,
a (first) container that
   is bottomless,
   has an outlet for the oxygen produced by the PEM cell,
   has a water outlet that feeds the PEM cell,
the membrane being arranged so as to be able to
   constitute watertightly the bottom of the first container,
   absorb water containable by the first container, and
   insert in the first container O₂ generated by the membrane;
a conduit containing de-ionizing material to de-ionize by contact feed water of the PEM cell,
a first valve for opening and closing the outlet for oxygen in the first container, so that with the valve closed the oxygen can accumulate in the first container and push the water into the conduit.

According to a preferred embodiment, the apparatus further comprises a second container, and said conduit containing de-ionizing material is configured to put into communication the first and second container.

Thus the water expelled from the first container can be recovered inside the second one.

According to a preferred embodiment, the second container
is bottomless
has an outlet for the oxygen,
is associated to a membrane PEM cell able to produce hydrogen by separating water molecules into oxygen and hydrogen molecules,
the membrane being arranged so that
it constitutes watertightly the bottom of the second container,
it can absorb water containable by the second container, and
it can insert in the second container O₂ generated by the membrane;
and the second container or the apparatus comprises a second valve for opening and closing the outlet for oxygen in the second container, so that with the valve closed the oxygen can accumulate in the second container and push water into the conduit toward the first container.

According to a more preferred embodiment, the first and second containers are partitions of a larger container.

According to a more preferred embodiment, the PEM cell associated with the first and second containers is the same PEM cell, or the second container has no associated PEM cell.

According to a preferred embodiment, the outlet for oxygen of the first container communicates with the second container so that oxygen generated by the cell of the first container can be sent into the second container to pressurize it.

According to a more preferred embodiment, the second container is placed on top of the first container so that water in the second container can return to the first container through the conduit due to the force of gravity.

In particular, the apparatus comprises means for setting the state of the valves of the first and second container such that one valve is open and the other is closed or vice versa. In particular, the apparatus comprises a device, e.g. an electronic processor, for cyclically varying the opened/closed state of the first and/or second valve. When the second valve is present, the device is configured to cyclically alternate the opened/closed state of the first and second valve.

According to a preferred embodiment, the apparatus comprises a sensor and the device is configured to control the opened/closed state of the first valve, or the alternating state of the first valve and second valve, depending on the signal read from the sensor.

Said sensor may be a sensor for the water level in the first and/or second container, and/or a sensor for the oxygen pressure in the first and/or second container,

According to a preferred embodiment, the device is configured to command the opened/closed state of the first valve, or the alternating state of the first valve and second valve, after a time that is
predetermined and fixed, or programmable, or a function of the signal emitted by said sensor.

According to a preferred embodiment, the apparatus comprises a timer and the device is configured to command the opened/closed state of the first valve, or of the first valve and the second valve, according to the signal generated by the timer.

Any known valve means may be used as valve, as long as they are capable of blocking or allowing a flow of gas.

The advantages of the invention will be clearer from the following description of a preferred embodiment of the apparatus, reference being made to the attached drawing wherein
- Fig. 1 shows a schematic front view of a first apparatus;
- Fig. 2 shows a schematic plan view of the apparatus in Fig. 1;
- Fig. 3 shows a schematic front view of a second apparatus;
- Fig. 4 shows a schematic front view of a third apparatus.

In the figures equal numbers indicate equal parts, and to avoid crowding the drawings some parts are not marked with numbers.

An apparatus MC1 for producing pure hydrogen from water comprises a membrane PEM cell - denoted overall by 12 - and a container 20 for water 14. The cell 12 has known structure and constitutes the bottom of the container 20 so that it is wetted on the top by the water 14.

The container 20 has, for example, a cylindrical shape and is divided into two chambers 30, 40 by an internal septum 50. The chambers 30, 40 are hermetically separated from each other and can communicate water with each other only through a conduit 52, which is external to the container 20 and fluidically connects a point P1 inside the chamber 30 with a point P2 inside the chamber 40; such points are preferably placed at the same vertical height. However, the location of said points is not essential.

The conduit 52 contains a de-ionizing material or resin 54 capable of deionizing water as it flows through the conduit 52.

Each chamber 30, 40 has an outlet 32, 42 for O₂ that is released from the PEM cell inside the chamber itself. From the outlets 32, 42 the O₂ is conveyed to the outside of the apparatus 10 and from there evacuated in a known manner while the H₂ generated by the cell 12 comes out of the opposite side of the cell 12 (the side opposite to the side wetted by the water) and is conveyed to the point of use or delivery.

On each outlet 32, 42 is mounted a valve 34, 44 connected to - and electrically controllable by - an electronic processor 56.

Once assembled, the container 20 is filled with water, which by direct contact feeds the underlying PEM cell 12.

Note that advantageously there are no pipes or pumps to transfer the water from the storage point to the PEM cell 12.

After the PEM cell 12 is electrically powered, inside the container 20, in each of the chambers 30, 40, O₂ bubbles develop from the PEM cell 12 and rise upwards while the water level drops as the reaction inside the cell 12 proceeds.

Initially, the processor 56 commands the opening of the valve 34 and the closing of the valve 44. While then the O₂ can go out of the chamber 30, in the chamber 40 the O₂ remains trapped and its gaseous pressure rises (the PEM cell 12 produces O₂ even overcoming a force greater than the weight of the water 14). At some point, the O₂ pressure in the chamber 40 is sufficient to push the water present inside the chamber 40 into the conduit 52, thus siphoning water into the chamber 30. During the migration of water from the chamber 40 to the chamber 30, the water is de-ionized by contact with the de-ionizing material 54 placed inside the conduit 52.

After a certain amount of time, the processor 56 commands the state reversal for the valves 34, 44, i.e. that the valve 44 is opened and the valve 34 is closed.

Now, for the same causes already described, a reverse transfer of water from the chamber 30 to the chamber 40 occurs, and again the water, which travels in the reverse direction the conduit 52, is de-ionized by contact with the de-ionizing material 54.

After that, another de-ionization cycle can begin again by closing the valve 44 again and opening the valve 34.

With the described system, a lot of water can be de-ionized within the unit of time, and while the PEM cell 12 is working to produce O₂. Furthermore, the de-ionization can involve almost the entire volume of water in the container 20.

From time to time it is sufficient to restore an adequate water level in the container 20. This can be done, for example, by arranging a level sensor or a float in the container 20, and by opening a water inlet valve (not shown) when the level is below a threshold. For this purpose an optional second water container 58 can be placed on top of the container 20 to fill the container 20 or 60 by gravity (see below).

A second apparatus MC2 for producing pure hydrogen from water comprises a membrane PEM cell - denoted overall by 52 - and a container 60 for water 44. The cell 52 has known structure and constitutes the bottom of the container 60.

A second container 70 is superimposed vertically on the container 60. Contact between the container 60 and the second container 70 is not necessary.

The container 60 and the container 70 are hermetically separated from each other and can communicate water with each other only through a vertical conduit 72, external to the containers 60, 70. The conduit 72 fluidically connects a point P3 near the base of the container 70 with a point P4 near the top or center of the container 60. However, the location of said points is not essential. The conduit 72, like the conduit 52, contains de-ionizing material 54.

A vertical duct or chimney 74 connects the ceiling of the container 60 with a point near the top of the container 70. The location of these points, too, is not essential.

The container 70 also comprises an outlet 78 for O₂ toward an outlet of the apparatus MC2. Only gas may flow through the vertical conduit 74, in particular O₂ generated by the PEM cell 52 and discharged into the container 60. The gas flow in the vertical conduit 74 is controlled by a valve 76, e.g. connected to - and electrically controllable by - an electronic processor 56.

When assembly is complete, the container 60 is filled with water, which, through direct contact, feeds the underlying PEM cell 52.

After the PEM cell 52 is energized, from the PEM cell 52 bubbles of O₂ develop inside the container 60 and rise to the top while the water level drops as the reaction inside the cell 52 proceeds. If the valve 78 is open, the produced O₂ reaches the outlet 78 and proceeds to the outlet of the apparatus MC2.

At some time, the processor 56 commands the closing of the valve 76. Then the O₂ can no longer exit the container 60 and remains trapped therein. Over time, the gaseous pressure of the O₂ rises until it becomes sufficient to push the water 44 present inside the container 60 into the conduit 72, thus migrating water into the container 70. During this migration, the water is de-ionized by contact with the de-ionizing material 54 located inside the conduit 72.

After a certain time, the processor 56 commands the reversal of the state of the valve 76, i.e. the valve 76 is opened. Now the O₂ under pressure in the container 60 is discharged into the container 70 and from there evacuated via the outlet 78. At the same time the pressure that sustained the water inside the container 70 is lost, and the water therein falls back by gravity into the container 60 going through the conduit 72 in reverse direction. During this journey, the water is de-ionized by contact with the de-ionizing material 54.

After that, another de-ionization cycle can begin by closing the valve 76 again.

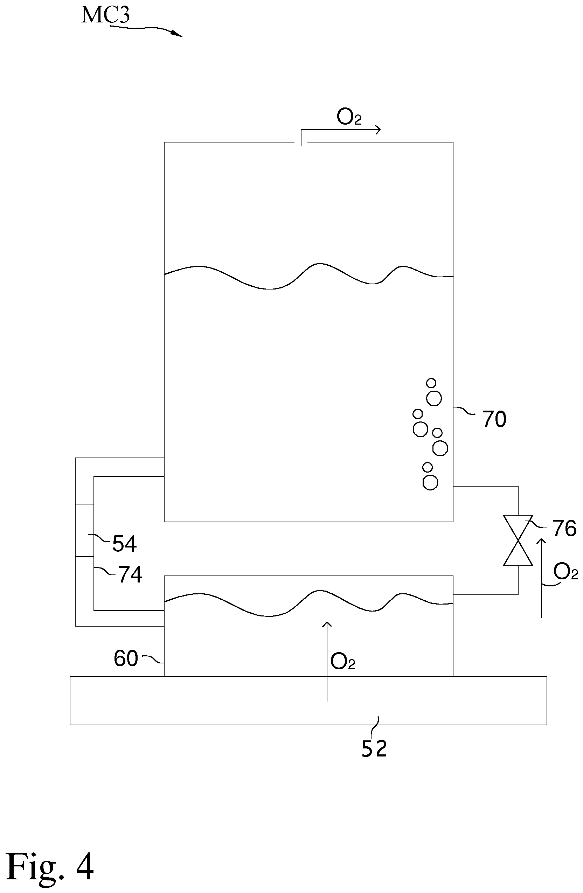

A third apparatus MC3 (Fig. 4) for producing pure hydrogen from water comprises a membrane PEM cell - denoted overall by 52 - and a container 60 for water 44. The cell 52 has known structure and constitutes the bottom of the container 60.

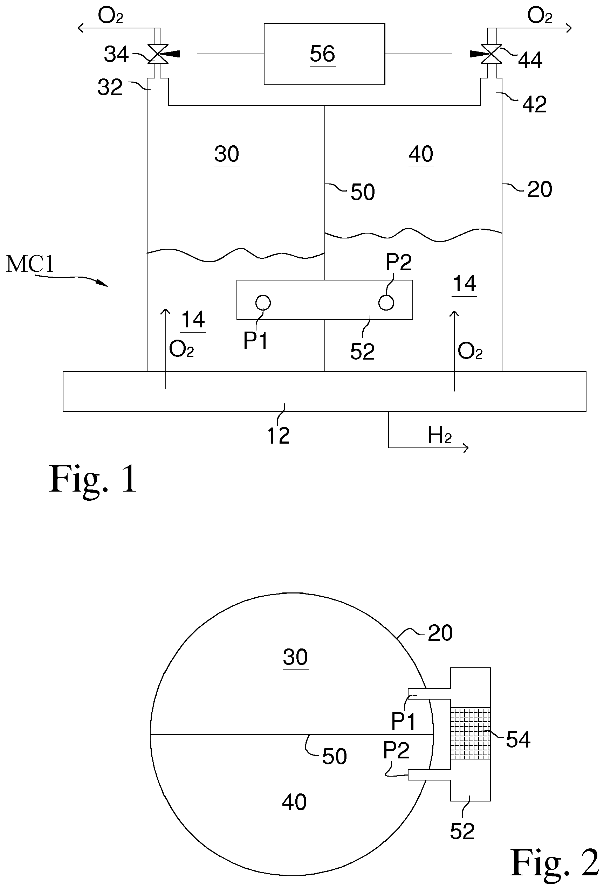

A second container 70 is superimposed vertically on the container 60, functionally the same as those of Fig. 2. A vertical conduit or chimney 74 connects the ceiling of the container 60 with a point, e.g. at the base, of the container 70. The container 70 also comprises an outlet for O₂ toward an outlet of the apparatus MC3.

Only gas can pass through the vertical conduit 74, specifically the O₂ generated by the PEM cell 52 and discharged into the container 60.

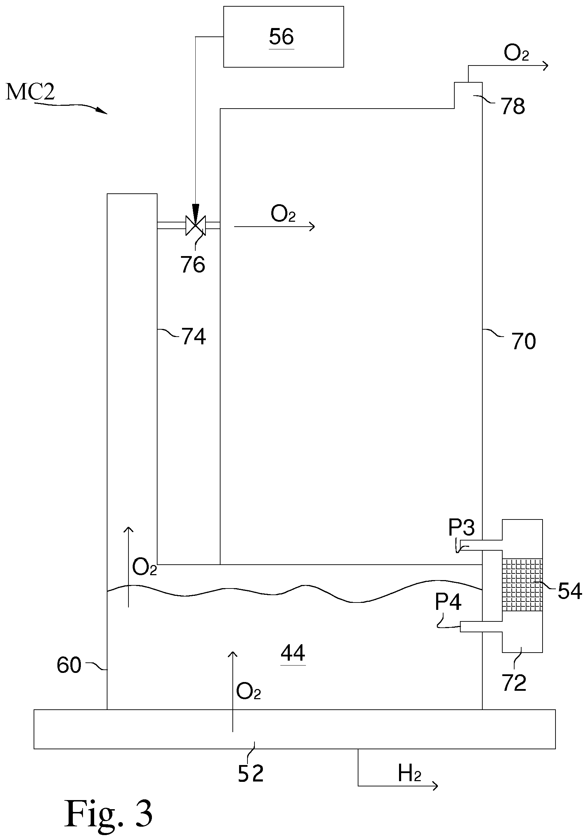

A flow of gas between the container 60 and the container 50 is controlled by a valve 76, preferably connected to - and electrically controllable by - an electronic processor such as the processor 56 (not shown in Fig. 3).

The conduit 74 comprises a deionizing-resin filter such as the filter 54.

When assembly is complete, the container 60 is filled with water, which, by direct contact, feeds the underlying PEM cell 52.

After the PEM cell 52 is electrically powered, O₂ bubbles develop from the PEM cell 52, go into the container 60, and increase the gaseous pressure inside the container 60. Meanwhile in the container 60 the water level drops as the reaction inside the cell 52 proceeds.

With the valve 76 closed, the pressure of the O₂ produced in the container 60 pushes the water from the container 60 into the container 70 through the conduit 74.

After a certain amount of time, determined for example by the processor 56, the valve 76 is opened. Then the O₂ migrates from the container 60 to the container 70 and simultaneously the water in the container 70 returns, by gravity, to the lower container 60 through the conduit 74 and the filter 64. The cycle begins again by closing the valve 76 again.

The processor 56 is optional, the control of the valves 76, 34, 44 being feasible e.g. manually or with a mechanical timer.

The control (opening and closing) of the valves 76, 34, 44 may take place with various logics: according to a timing or a fixed cadence, or as a function of the level of the water 14, 44, or of the pressure of the O₂ inside the chamber or container which from time to time is put under pressure. For this purpose, water level and/or internal gas pressure sensors may optionally be installed inside the container 20, 60. Preferably, the sensors are connected to the processor 56 to program the control of the valves.

When the de-ionizing material 54 runs out or becomes exhausted, one needs to change only that, or just replace it along with the conduit 52, 72, 74, for the benefit of ease and speed of maintenance. The conduit 52, 72, 74 therefore act as a replaceable cartridge.

The containers 60, 70 may or may not be in contact with each other.

The application of the container 20, 60 to the PEM cell 12 may generally occur in any manner, provided that there is direct contact between the contained water 14 and the PEM cell 12.

Not necessarily the PEM cell 12 has to constitute the bottom of the container 20, as the PEM cell 12 may also constitute a side wall thereof.

The apparatus can operate cyclically, but also with single deionization passes.

## Claims

1. Method for producing hydrogen by separating water molecules into oxygen and hydrogen molecules through a membrane PEM cell and simultaneously de-ionizing feed water of the PEM cell, wherein:
a pressurized build-up of oxygen generated by the PEM cell is obtained and
with such pressure a force is generated to push the feed water through a de-ionizing material or means.

2. Method according to claim 1, wherein the feed water passed through the de-ionizing material or means is recovered in a container.

3. Method according to claim 2, wherein the water recovered in the container returns to its starting point by crossing in opposite direction the de-ionizing material or means.

4. Method according to claim 2 or 3, wherein the water returns to the starting point by means of the force of gravity.

5. Method according to claim 2 or 3 or 4, wherein the water returns to the starting point pushed by the gaseous pressure generated by a pressurized buildup of oxygen generated by a PEM cell.

6. Apparatus for producing hydrogen, comprising.
a membrane PEM cell capable of producing hydrogen by separating water molecules into oxygen and hydrogen molecules,
a first container that
is bottomless,
has an outlet for the oxygen produced by the PEM cell,
has a water outlet that feeds the PEM cell,
the membrane being arranged so that it
constitutes hermetically the bottom of the first container,
can absorb water containable by the first container, and
can insert in the first container O₂ generated by the PEM cell;
a conduit containing de-ionizing material to de-ionize by contact the feed water of the PEM cell,
a first valve for opening and closing the oxygen outlet in the first container, so that with the valve closed oxygen can accumulate in the first container and push water into the conduit.

7. Apparatus according to claim 6, further comprising a second container, and said conduit containing de-ionizing material is configured to put into communication the first and second container.

8. Apparatus according to claim 7, wherein the second container
is bottomless
has an oxygen outlet,
is associated with a membrane PEM cell capable of producing hydrogen by separating water molecules into oxygen and hydrogen molecules,
the membrane being arranged so that it
constitutes hermetically the bottom of the second container,
can absorb water containable by the second container, and
can insert in the second container O₂ generated by the PEM cell;
and the apparatus comprises a second valve for opening and closing the oxygen outlet in the second container, so that with the valve closed, oxygen can buildup in the second container and push water into the conduit toward the first container.

9. Apparatus according to claim 7 or 8, wherein the first and second containers are partitions of a larger container.

10. Apparatus according to claim 7 or 8 or 9, wherein the PEM cell associated with the first and second container is the same PEM cell or the second container has no associated PEM cell.
